Europäisches Patentamt

European Patent Office

Office européen des brevets

(11) Veröffentlichungsnummer : **0 169 461**
**B1**

# (12) EUROPÄISCHE PATENTSCHRIFT

(45) Veröffentlichungstag der Patentschrift :
15.03.89

(21) Anmeldenummer : 85108741.1

(22) Anmeldetag : 12.07.85

(51) Int. Cl.⁴ : **H 02 M   3/156, H 04 B   3/44**

(54) Schaltungsanordnung zur Speisung von elektrischen Verbrauchern mit einer Gleichspannung.

(30) Priorität : 13.07.84 DE 3425929

(43) Veröffentlichungstag der Anmeldung :
29.01.86 Patentblatt 86/05

(45) Bekanntmachung des Hinweises auf die Patenterteilung : 15.03.89 Patentblatt 89/11

(84) Benannte Vertragsstaaten :
AT BE CH DE FR GB IT LI NL SE

(56) Entgegenhaltungen :
EP—A— 0 111 729

(73) Patentinhaber : **Siemens Aktiengesellschaft Berlin und München**
**Wittelsbacherplatz 2**
**D-8000 München 2 (DE)**

(72) Erfinder : **Musil, Gerhard, Dipl.-Ing.**
**Ludwig-Braille-Strasse 8**
**D-8000 München 70 (DE)**

EP 0 169 461 B1

**Beschreibung**

Die Erfindung bezieht sich auf eine wie im Oberbegriff des Patentanspruchs 1 angegebenen Schaltungsanordnung.

Eine derartige Schaltungsanordnung ist bereits aus der EP-A-111729 oder aus der EP-A-99596 bekannt.

Die Schaltungsanordnung nach der EP-A-111729 beschreibt einen konstantstromgespeisten Umrichter, der in der Weise eine konstante, potentialgetrennte Spannung für eine variable Belastung erzeugt, daß ein entsprechend geregelter Drosselwandler eine variabel aufgenommene Spannung in eine stabilisierte Spannung umsetzt. Die stabilisierte Spannung ist etwas höher als die der Maximalleistung zugeordnete Eingangsspannung. Aus der stabilisierten Spannung wird von einem ungeregelten Durchflußwandler potentialgetrennt die Ausgangsspannung erzeugt.

Umrichter, die mit konstant gehaltenem Strom gespeist werden und ihre Eingangsspannung der jeweils geforderten Ausgangsleistung anpassen, können nicht ohne weiteres wie übliche Umrichter, die von einer Spannungsquelle aus betrieben werden, mit Hilfsspannung versorgt werden, da diese sowohl von der Eingangsspannung als auch von der Ausgangsspannung nur mit größerem Aufwand abzuleiten ist. Die Eingangsspannung variiert stark und die Ausgangsspannung ist bei größeren Leistungen so hoch, daß entweder spezielle Bauteile erforderlich sind und/oder größere Verlustleistung entsteht.

Außerdem ist für solche Geräte ein Schutz gegen Beeinflussungsströme nicht ohne weiteres möglich, da sie ihre Eingangsspannung mit zunehmendem Eingangsstrom herabsetzen und zum Beispiel Überspannungsableiter, wie sie für ohmsche Verbraucher üblich sind, nicht ansprechen. Die dann fließenden hohen Ströme könnten aber das Gerät zerstören.

Aufgabe der Erfindung ist es daher, die Schaltungsanordnung der eingangs genannten Art derart auszubilden, daß die erforderlichen Hilfsspannungen mit möglichst einfachen Mitteln zu erzeugen sind und nach einem Einschalten der Schaltungsanordnung möglichst schnell zur Verfügung stehen.

Gemäß der Erfindung wird die Schaltungsanordnung in der im kennzeichnenden Teil des Patentanspruchs 1 angegebenen Weise ausgebildet.

Insbesondere sind der als Leistungswandler dienende erste Schaltregler und der zur Erzeugung der Hilfsspannung vorgesehene zweite Schaltregler von der gleichen Art.

Durch diese Maßnahmen ergibt sich der Vorteil, daß die Hilfsspannung nach nur kurzer Zeit praktisch sprungartig einsetzt.

Vorteilhafte Ausgestaltungen der Erfindung ergeben sich aus den Unteransprüchen.

Die Erfindung wird anhand der in den Figuren dargestellten Ausführungsbeispiele näher erläutert.

Es zeigen :

Fig. 1 eine Einrichtung zur Fernspeisung elektrischer Verbraucher mittels Gleichstrom-Reihenspeisung,

Fig. 2 einen Schaltregler, der einen eingeprägten Gleichstrom in eine Konstantspannung umwandelt und eine Vorrichtung zur Hilfsspannungserzeugung,

Fig. 3 einen Schaltregler nach Fig. 1 mit weiteren Einzelheiten der Vorrichtung zur Hilfsspannungserzeugung,

Fig. 4 einen Schaltregler mit einem Relaiskontakt am Eingang, der auch zum Ableiten von Überströmen dient,

Fig. 5 eine weitere Ausgestaltung der Anordnung nach Fig. 4, und,

Fig. 6 einen Schaltregler, dessen Schaltglied zum Ableiten von Überströmen zusätzlich ausgenutzt ist.

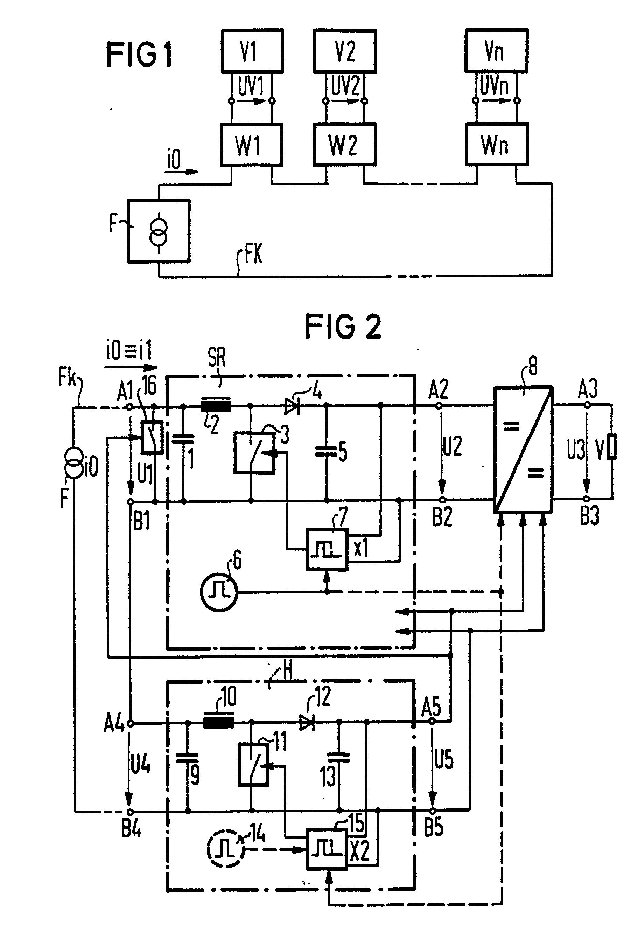

In Figur 1 ist eine ferngespeiste Anlage als Blockschaltbild dargestellt. Das fernspeisende Gerät F gibt einen konstanten Gleichstrom $i_o$ ab. Die fernzuspeisenden Verbraucher V1, V2, ... Vn werden an ihrem Speiseeingang am besten mit konstanter Spannung betrieben. Die vorgeschalteten Schaltregler W1, W2, ... Wn wandeln den an ihrem Eingang eingeprägten Strom $i_o$ in eine konstante Spannung $U_{V1}$, $U_{V2}$,... $U_{Vn}$ für den Verbraucher um.

Die in Figur 2 gezeigte Schaltungsanordnung enthält den Schaltregler SR, den Spannungsumsetzer 8 und die Vorrichtung H zur Hilfsspannungserzeugung.

Der Schaltregler SR nach Figur 2 ist in an sich bekannter Weise als Drosselwandler ausgebildet und kann auch in anderer Art ausgeführt sein. Wesentlich ist, daß er am Eingang von einem eingeprägten Strom gespeist wird und eine Hilfsspannung benötigt. Die in Figur 2 gezeigte Art ist aber besonders vorteilhaft, da die Schaltregler SR und H vom gleichen Typ sind und daher am einfachsten mit den gleichen Ansteuermitteln versehen werden können.

Bei dem Schaltregler SR ist parallel zum Eingang der Kondensator 1 und parallel zum Ausgang der Kondensator 5 angeordnet. Die Kondensatoren 1 und 5 und das Schaltglied 3 sind einpolig miteinander verbunden. Auf der diesem Verbindungspunkt abgewandten Seite sind die Kondensatoren 1 und 5 über eine Serienschaltung aus der Drossel 2 und der Diode 4 verbunden, wobei die Drossel 2 am Eingang liegt und die Diode 4 so gepolt ist, daß sie für Ströme vom Eingang zum Ausgang durchlässig ist. Das Schaltglied 3 ist in einem Querzweig des Schaltreglers zwischen dem Verbindungspunkt von Drossel 2 und Diode 4 einerseits und dem Verbindungspunkt der Kondensatoren 1 und 5 andererseits angeordnet.

Der Schaltregler SR bildet den eigentlichen Strom-Spannungsumformer. Dieser besteht aus der Drossel 2 und dem Halbleiterschalter 3, die in Serie zueinander unmittelbar im ferngespeisten Leitungszug liegen ; parallel dazu ist der Kondensator 1, der klein ist im Vergleich zu dem am Ausgang des Schaltreglers liegenden Kondensator 5, angeordnet.

Der Halbleiterschalter 3 wird von einem impulsbreitenmodulierten Signal in der Weise geöffnet und geschlossen, daß gerade so viel vom Fernspeisekreis und von der in der Drossel 2 und dem Eingangskondensator 1 gespeicherten Energie über die Diode 4 dem Ausgangskondensator 5 zugeleitet wird, daß an diesem die Spannung konstant bleibt, solange ein bestimmter maximaler Laststrom, der an dieser Stelle höchstens gleich dem Fernspeisestrom $i_o$ sein kann, nicht überschritten wird. Die Steuerung des pulsbreitenmodulierten Signals erfolgt in gleicher Weise wie bei bekannten Drosselwandlern.

Der dem Schaltregler nachgeschaltete Gleichspannungsumrichter 8 kann wegen der konstanten Spannung U2 an seinem Eingang in einfacher Weise nach einem der bekannten Prinzipien ausgeführt werden. Es ist vorzugsweise ein ungeregelter Durchflußumrichter mit Trennübertrager. Seine Taktfrequenz wird vorteilhaft vom gleichen Oszillator 6 bezogen, der auch den Schaltregler ansteuert.

Das Gerät kann auch schnellen Lastschwankungen folgen, da der Eingangskondensator 1 verhältnismäßig klein ist und daher rasch auf die dem geänderten Lastfall entsprechende neue Eingangsspannung umgeladen wird. Der im Vergleich dazu vom Prinzip her träge Spannungsumrichter ist von der Änderung in seiner Betriebsweise nicht betroffen.

Der Taktgeber 6, der Regler 7 und ggf. auch der Spannungsumrichter 8 benötigen eine Hilfsspannung. Diese wird im Schaltregler H erzeugt, der die gleiche Funktionsweise hat, wie sie hier für den Schaltregler SR angegeben wurde. Einander entsprechende Schaltmittel sind 9 und 1, 10 und 2, 11 und 3, 12 und 4, 13 und 5, 14 und 6, sowie 15 und 7. Die Schaltmittel des Schaltreglers H werden für die dort geltenden Anforderungen nach den gleichen Prinzipien wie beim Schaltregler SR bemessen. Zweckmäßigerweise wird der Taktgeber 6 auch für den Schaltregler H verwendet, so daß der Taktgeber 14 entfallen kann.

Der Schaltregler H erzeugt eine positive und eine negative Hilfsspannung bezogen auf das Potential der unmittelbar miteinander verbundenen Klemmen B1 und B2. Da die Spannung U5 größer als die Spannung U4 ist und sich beide Spannungen auf das Potential der Klemmverbindung B4, B5 beziehen, ist die zur Verfügung stehende positive Hilfsspannung die Spannung U5-U4. Als negative Hilfsspannung dient die Spannung U4. Bei üblicher Dimensionierung ist dabei U5 etwa um den Faktor 5 bis 10 größer als U4, was auch die im allgemeinen gestellten Forderungen erfüllt. So ergibt sich zum Beispiel bei einem Fernspeisestrom von 0,4 A, üblichen Hilfsspannungen von etwa 10... 20 V und der vergleichsweise geringen Ausgangsleistung der Hilfsspannungsquelle eine Spannung U4 von etwa 2 V.

Zum Anlaufen der Hilfsspannungserzeugung ist es notwendig, daß zunächst bei geöffnetem Schalter 11 die Spannung U5 den Wert erreicht, bei dem der Taktgeber 14 und die Regeleinrichtung 15 zu arbeiten beginnen. Der Schaltregler SR ist so ausgeführt, daß zunächst der Schalter 3 offen ist. Auch einfache Abwandlungen des Schaltreglers verhalten sich so, da die Spannungen U2 und U3 zunächst zu niedrig sind, und die Anordnung ohne weitere Maßnahmen dazu neigen, durch Öffnen des Schalters 3 zunächst möglichst viel Energie aufzunehmen. Da somit auch der Schalter 3 zunächst geöffnet ist, kommt es zunächst zu einer Spannungsaufteilung U1 :U4 näherungsweise im umgekehrten Verhältnis der Kapazitätswerte der Kondensatoren 5 und 13. Erreicht die Spannung U5 ihren Sollwert, so beginnt der Regler 15 zu arbeiten und steuert entsprechend den Schalter 11 mit Impulsen so an, daß dieser periodisch geschlossen wird. Die Spannung U4, die zunächst etwa so groß ist wie die Spannung U5, wird innerhalb weniger Millisekunden auf ihren späteren Wert reduziert. Für den Schaltregler SR und den Umrichter 8 steht dann die positive Hilfsspannung U5 - U4 zur Verfügung. Die reduzierte Spannung U4 verbleibt als negative Hilfsspannung.

In vorteilhafter Weise setzt die positive Hilfsspannung sehr rasch ein. Dies ergibt sich daraus, daß sich nach dem Einschalten zunächst die Kondensatoren 9 und 13 aufladen und daran anschließend beim Einsetzen der Regelung des Schaltreglers H die Spannung am Kondensator 9, der eine vergleichsweise kleine Kapazität hat, zusammenbricht. Für die Schaltungsanordnung treten somit keine Übergangszustände auf, die insbesondere empfindliche Leistungsbauelemente beschädigen könnten.

Dabei werden als Schalter 3 zweckmäßigerweise Transistoren verwendet, die so zu betreiben sind, daß jeweils die Klemmen A1 und A2 positiv gegen die Klemmen B1 und B2 sind. Werden Schalter umgekehrter Polarität verwendet und dafür auch eine Ansteuerung benötigt, die aus einer negativen Hilfsspannung versorgt werden muß, so gilt die gesamte Anordnung sinngemäß, wobei aber die Zählpfeile der Spannungen U1 ... U5 und die der Ströme umzudrehen sind ; ferner muß bei den Dioden 4 und 12 jeweils Anode und Kathode vertauscht werden. In diesem Fall setzt die negative Hilfsspannung wie gewünscht innerhalb kurzer Zeit ein und ist dann ebenfalls um den Faktor 5... 10 größer als die positive Hilfsspannung.

Zunächst läuft auch die Spannung U3 auf einen gewissen Betrag hoch, was unter Umständen unerwünscht sein kann. Es wird daher ein Schalter 16 eingefügt.

Der Schalter 16, der am Eingang des Schaltreglers SR liegt, ist zunächst geschlossen und wird erst bei vorhandener Hilfsspannung geöffnet. Dadurch wird auch bei einem langsamen Hochlaufen der zwischen den Punkten A1 und B4 liegenden Spannung, wie es unter Umständen durch schlechte dynamische Eigenschaften des fernspeisenden Gerätes F oder durch Kabelkapazitäten hervorgerufen sein kann, mit Sicherheit vermieden, daß der Schaltregler SR unkontrolliert zuviel Spannung aufnimmt. Der Schalter 16 ist zweckmäßigerweise ein Ruhekontakt eines Relais, dessen Wicklung von der Hilfsspannung U5 - U4 angesteuert wird.

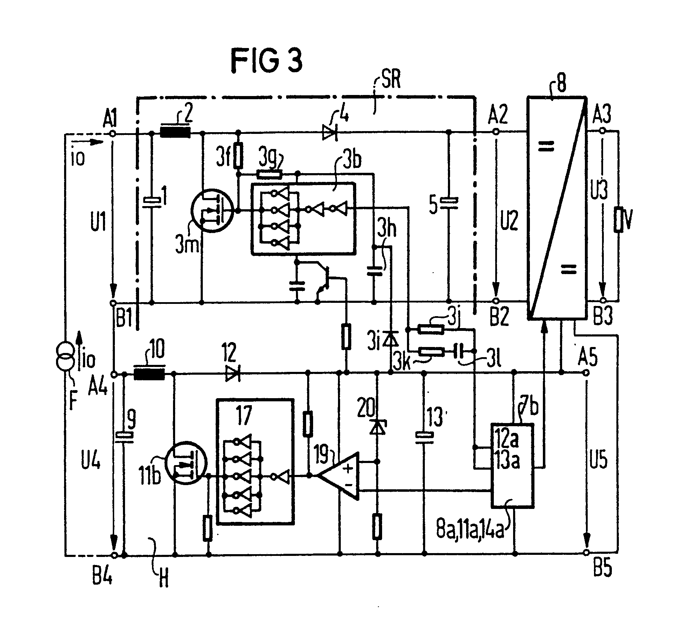

Besonders vorteilhaft ist es, statt des Schalters 16 den in jedem Fall vorhandenen Schalter 3 zu benutzen. Wird an dieser Stelle ein MOS-Feldeffekttransistor 3m verwendet, so genügt es, einen hochohmigen Widerstand 3f zwischen dessen Gate und Drain zu schalten, um ihn beim Einschalten des Stromes $i_o$ in ausreichend leitenden Zustand zu bekommen. Eine derartige Schaltungsanordnung geht aus Figur 3 hervor.

Bei der in Figur 3 gezeigten Schaltungsanordnung dient die mit 7b bezeichnete integrierte Schaltung SG 3524 J als Taktgeber 6 und Regler 7. Sie erzeugt den Takt und steuert den Schaltregler SR mit breitenmodulierten Steuerimpulsen. Der von diesem Schaltkreis abgegebene Sägezahn wird dem Komparator 19 zugeleitet, der ihn mit der um den Spannungsabfall an einer Z-Diode 20 verminderten Spannung U5 vergleicht. Die Impulse am Ausgang des Komparators 19 steuern über den Treiber 17 den Schalttransistor 11b. Die mit dieser einfachen Anordnung gewonnene Stabilisierung ist ausreichend. Die Spannung U5 kann zum Beispiel etwa 13 V, die zugehörige Eingangsspannung U4 bei laufendem Gesamtgerät zum Beispiel etwa 1,6 V bei einem Fernspeisestrom $i_o$ = 0,4 A betragen.

Die zusätzlichen Bauelement 3f ... 3l um den Ansteuerbaustein 3b des Schalters 3 im Schaltregler SR verhindern, daß die zunächst im Vergleich zum Potential der Klemme B1 negativen Spannungen im Hilfsumrichter H eine negative Spannung an das Gate des Feldeffekttransistors 3b bringen und so das Schließen dieses Schalters verhindern. Dadurch ist es auch möglich, den zwischen Gate und Drain des Feldeffekttransistors 3m liegenden Widerstand 3f so hochohmig zu halten, daß er im Betriebszustand nur sehr geringe Verluste verursacht.

Diese Art der Hilfsspannungserzeugung läßt sich auch mit auf andere Art ausgeführten stromgespeisten Umrichtern auf vorteilhafte Weise verbinden, auch in Verbindung mit dem Schalter 16 oder seinen Ersatz durch den Schalter 3, wenn der zu versorgende stromgespeiste Umrichter einen solchen im Zug des Fernspeisestromes $i_o$ liegenden Schalter besitzt. Auch kann es vorteilhaft sein, sowohl eine Hilfsspannungsquelle für positive Spannungen bezogen auf die Klemme B1 als auch eine solche für negative Spannungen bezogen auf die Klemme A1 vorzusehen.

Nach dem Anlaufen der Hilfsspannung wird der Schalter 16 geöffnet und/oder der Schalter 3 von der Ansteuervorrichtung 7 mit Impulsen angesteuert. Da die Spannung U2 zunächst noch zu niedrig ist, würde die Regelung von sich aus auf maximal mögliche Eingangsspannung U1 laufen. Für bestimmte Anwendungsfälle wird der Schaltregler SR zweckmäßigerweise so dimensioniert, daß auch noch eine Überlast, zum Beispiel hervorgerufen durch einen defekten Verbraucher V, zumindest kurzzeitig beherrscht werden kann. In einer Fernspeiseeinrichtung mit vielen Verbrauchern ist im allgemeinen nur mit einem oder wenigen solcher Überlastfälle zu rechnen. Verhalten sich die Schaltregler SR beim Einschalten, das ja für alle Schaltungsanordnungen nach Figur 1 in einer solchen Fernspeiseeinrichtung gleichzeitig erfolgt, wie bei der Verarbeitung von Überlastfällen, so muß die Konstantstromquelle der Fernspeiseeinrichtung entsprechend dimensioniert werden. Für den praktischen Betrieb ist sie dann überdimensioniert oder kann vielleicht gar nicht realisiert werden.

Man kann zusätzliche Maßnahmen ergreifen, die ein gleichzeitiges Einschalten aller Geräte verhindern. Dies erfordert jedoch eine unterschiedliche Ausbildung oder Einstellung der ferngespeisten Einrichtungen.

Die geregelte Ansteuerbaugruppe 7 ist so betrieben, daß zunächst eine Pulsfolge mit festem oder zumindest beschränktem Tastverhältnis abgegeben wird und sich so beim gesamten Anlaufvorgang am Klemmenpaar A1, B1 eine Spannung $U_{1ein}$ einstellt, die kleiner als die nach Beendigung des Anlaufvorganges maximal mögliche Eingangsspannung $U_{1max}$ ist. Mit der der Spannung $U_{1ein}$ zugeordneten Leistungsaufnahme wird dann zunächst der Schaltregler SR betrieben und der Kondensator 5 geladen. Überschreitet die Spannung U2 ihren Sollwert um einen bestimmten kleinen Betrag Δ U2, so wird das vom Regler 7 als Regelabweichung erfaßt und der Regler 7 wird in die normale Betriebsweise umgeschaltet. Die Regelung reagiert dann zunächst mit einem Herabsetzen der Eingangsspannung U1, wodurch auch die Spannung U2 sinkt. Bei Erreichen des Sollwertes der Spannung U2 stellt sich die der abgegebenen Leistung zugeordnete Eingangsspannung U1 ein. Eine solche Steuerung wird in der EP-A-169462 näher beschrieben.

Vorteilhaft ist es, das Tastverhältnis beim Anlauf so zu bemessen, daß die Leistungsaufnahme dann gerade geringfügig höher ist als sie sich einstellen würde, wenn der Verbraucher V seine Nennleistung aufnimmt. Defekte Verbraucher mit zu hoher Leistungsaufnahme werden dann automatisch nicht voll angeschaltet.

Eine zweite vorteilhafte Bemessung ist so, daß ausgehend von dem Betriebsfall, bei dem Fernspeiseeinrichtung die höchste Leistung abgeben muß, die mögliche Leistungsaufnahme für das Anlaufen der Schaltregler errechnet wird und in der Folge das zugehörige Tastverhältnis. Man bekommt so die für die Fernspeiseeinrichtung mögliche kürzeste Anlaufzeit, ohne für den Betriebsfall unnötige Reserven vorsehen zu müssen.

Eine weitere vorteilhafte Bemessung ist so, daß die Verbraucher zunächst ganz oder teilweise weggeschaltet werden und die mögliche Leistungsaufnahme für das Anlaufen der Schaltregler nach dem Betriebsfall bemessen wird, für den die niedrigste Fernspeisespannung pro Gerät zur Verfügung steht. Nach dem Anlaufvorgang werden dann der bzw. die Verbraucher zugeschaltet. Die Auslösung dieses Vorgangs geschieht zweckmäßigerweise durch die gleiche Vorrichtung, die auch das Ende des Anlaufvorgangs erkennt und auf die normale Betriebsweise umschaltet.

Strom-Spannungs-Umrichter mit eingangsseitiger Anpassung der Spannung an die jeweils geforderte Leistungsaufnahme reduzieren ihre Eingangsspannung, wenn der Eingangsstrom erhöht wird. Daß diese Erhöhung auf einen Störfall, meist auf Induktion eines Stromes von außerhalb des Systems her, zurückgeht, ist nicht erkennbar. Eine geringfügige Erhöhung des Stromes im Fernspeisekreis ist zunächst ohne Bedeutung und beeinträchtigt nicht die Funktion der Schaltungsanordnung. Steigt der Strom im Fernspeisekreis jedoch über ein bestimmtes Maß an, so muß entweder der Schalter 3 auch dafür dimensioniert sein oder es besteht die Gefahr, daß die Schaltungsanordnung ausfällt.

Der Fernspeisestrom wird mit einem Fühlglied erfaßt. Der Umrichter kann während der Zeit des unzulässigen Überstroms von einem zusätzlichen Strompfad überbrückt werden, der von dem Fühlglied aus angesteuert wird und den Überstrom ableitet. Dieser Strompfad wird in besonders einfacher Weise durch die gleichen Vorrichtungen gebildet, die auch den als Hauptumrichter dienenden Schaltregler SR während des Anlaufens der Hilfsspannung kurzschließen.

Der Schalter 16 nach Figur 2 sorgt dafür, daß der Eingang des Schaltreglers SR während der Zeit eines unzulässig großen Eingangsstromes $i_0$ überbrückt wird. Auch der Schalter 3 des Schaltreglers SR kann zu diesem Zweck vorteilhaft Verwendung finden. Er muß in diesem Fall zwar für den Überstrom ausgelegt sein, braucht aber nicht diesen Strom mit der Taktfrequenz zu schalten. Dies stellt eine wesentliche Erleichterung dar.

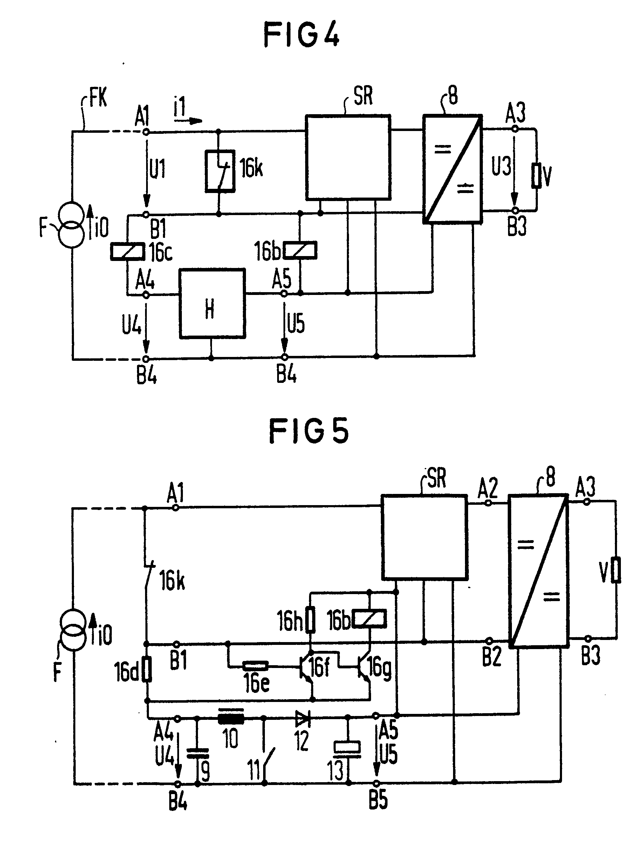

Nach Figur 4 wird der Schalter 16 durch ein Relais realisiert, das zur Gewährleistung des Anlaufverhaltens der Schaltungsanordnung einen Ruhekontakt 16k hat. Er wird nach dem Anlaufen der Hilfsspannung U5 - U4 von dieser über die Wicklung 16b geöffnet. Zur Ableitung der Überströme wird für das Relais zweckmäßigerweise eine zweite Wicklung im Leitungszug der Klemmen B1 - A4 oder auch vor der Klemme A1 bzw. nach B4 vorgesehen, die den Ruhekontakt im Sinne eines Arbeitskontaktes schließt. Diese Wicklung ist in Figur 4 zwischen den Klemmen B1 und A4 eingezeichnet und mit 16c bezeichnet. Die zweite Wicklung ist aber so dimensioniert, daß bei normalem Fernspeisestrom die Hilfsspannung den Kontakt des Relais geöffnet halten kann. Besonders vorteilhaft ist bei einer solchen Lösung, daß Störungen der Hilfsspannung, etwa hervorgerufen durch starke überlagerte Wechselströme, auf die der Hilfsumrichter H nicht richtig reagieren kann, in gleicher Weise zum Schließen des Kontaktes 16 beitragen und dieser erst bei ordnungsgemäßem Arbeiten des Hilfsumrichters H einen Betrieb des als Leistungsumrichter dienenden Schaltreglers SR erlaubt.

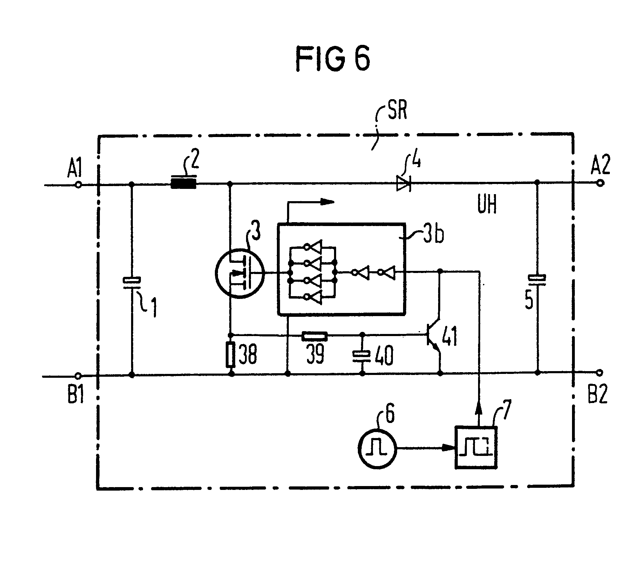

Statt einer zweiten Wicklung kann im Leitungszug A1 - B4 auch ein Stromfühler zum Beispiel in Form eines Widerstands liegen, der mittelbar oder unmittelbar den Schalter 16k schließt. Eine solche Lösung ist in Figur 5 angegeben. In Figur 5 steuert der Spannungsabfall an einem Widerstand 16d über einen Widerstand 16e einen Transistor 16f, der bei normalem Fernspeisestrom gesperrt ist.

Der Transistor 16g kann daher, angesteuert über den Widerstand 16h, Strom führen und den Ruhekontakt 16k über die Wicklung 16b öffnen, sobald die Hilfsspannung U5 - U4 einsetzt. Überschreitet der Fernspeisestrom $i_0$ einen vorgegebenen Wert, so wird der Transistor 16f leitend. Der dann gesperrte Transistor 16g ermöglicht ein Schließen des Ruhekontakts 16k. Die Schaltung kann ähnlich wie bei Figur 6 gezeigt auch zweckmäßigerweise mit einer Zeitverzögerung aufgebaut werden, um bei Wechselströmen ruhiger zu arbeiten.

Eine weitere vorteilhafte Möglichkeit besteht darin, den Schalter 3 bei Überstrom zu schließen. In diesem Fall muß allerdings der Hilfsumrichter H zumindest ausreichend weiterarbeiten, um ein aktives Ansteuern des Schalters 3 zu gewährleisten. Bei der im allgemeinen vergleichsweise geringen Leistungsabgabe des Hilfsumrichters H ist das meist möglich.

In Figur 6 ist ein Ausschnitt aus einer Schaltungsanordnung gezeigt, bei der der Schalter 3 zum Ableiten des Überstroms benutzt wird. Der Strom wird hier als Spannungsabfall an einem 1Ω-Widerstand 38 in Serie zum den Schalter 3 bildenden Leistungs-MOS-Feldeffekttransistors BUZ 45 A erfaßt und über ein RC-Glied 39, 40 einem Transistor 41 zugeleitet. Der Transistor 41 greift in den Leitungszug der Ansteuerung in der Weise ein, daß der Schalttransistor 3m dauernd leitend bleibt. Da nur hohe Überströme erfaßt werden sollen, ist es von geringer Bedeutung, ob das Fühlglied direkt im Zuge des Fernspeisestromes liegt, oder in Serie zum Schalter 3, wo der in den Ausgangskreis des Schaltreglers SR fließende Strom nicht erfaßt wird.

Die beschriebenen Maßnahmen zur Überbrückung des Schaltreglers SR beim Anlaufen der Hilfsspannung und bei Überstrom lassen sich auch kombinieren, zum Beispiel ein Relais 16 mit Ruhekontakt der von der Hilfsspannung geschlossen wird und ein zweites Relais, das einen Arbeitskontakt parallel zu diesem Ruhekontakt hat und der bei Überstrom von einer Wicklung im Fernspeisekreis geschlossen wird. Diese Kombinationen sind zwar aufwendiger, sie können aber unter Umständen Vorteile bei der Realisierung bringen, da die jeweils eingesetzten Bauteile bzw. Baugruppen nur eine der beiden benötigten Aufgaben bewältigen müssen, und so leichter diesen angepaßt werden können.

Das Relais mit seinem Ruhekontakt und seiner Wicklung 16b und 16c aus Fig. 4 kann gegebenenfalls als elektronisches Relais oder elektronische Schaltung mit oder ohne Relais ausgebildet sein und dabei den Schalter 3 mitbenutzen.

Die Schaltungsanordnung kann in einem Fernspeisesystem nach Fig. 1 mit gleich- oder verschiedenartigen weiteren Schaltungsanordnungen gemeinsam gespeist werden. Dabei können die Schaltungsanordnungen W1 ... Wn gleich oder verschieden ausgebildet und/oder bemessen sein.

Bei einer bevorzugten Ausführungsform der Schaltungsanordnung nach Fig. 3 betragen

der Wert des Widerstandes 3f 2 M $\Omega$

der Wert des Widerstandes 3g 100 k $\Omega$ und

der Wert des Widerstandes 3j 1 M $\Omega$.

Als Diode 3i ist eine solche mit kleinem Reststrom gewählt.

## Patentansprüche

1. Schaltungsanordnung zur Speisung von elektrischen Verbrauchern (V) mit einer Gleichspannung, wobei wenigstens ein Verbraucher (V) über einen ersten Schaltregler (SR) an einen mit einem eingeprägten Strom ($i_o$) gespeisten Speisekreis (FK) angeschlossen ist und der Schaltregler (SR) wenigstens ein mittels einer aus einer Hilfsspannungsquelle (H) versorgten Steuerschaltung (6, 7) in Abhängigkeit von der wenigstens näherungsweise konstant zu haltenden Gleichspannung (U2 bzw. U3) steuerbares Schaltglied (3) enthält, dadurch gekennzeichnet, daß die Hilfsspannungsquelle durch einen zweiten Schaltregler (H) gebildet ist, dessen Schaltglied parallel zum Eingang des Schaltreglers (H) angeordnet ist und daß· zwischen dem Schaltglied (11) und einem parallel zum Ausgang des Schaltreglers (H) liegenden Kondensator (13) eine derart gepolte Diode (12) liegt, daß die Diode (12) bei leitendem Schaltglied (11) gesperrt ist und daß die beiden Schaltregler (SR, H) am Eingang in Serie zueinander angeordnet sind.

2. Schaltungsanordnung nach Anspruch 1, dadurch gekennzeichnet, daß parallel zum Eingang des ersten Schaltreglers (SR) ein durch den zweiten Schaltregler (H) derart steuerbarer Schalter (16) angeordnet ist, daß der Schalter (16) nur bie vorhandener Hilfsspannung (U5) geöffnet ist.

3. Schaltungsanordnung nach Anspruch 1 oder 2, dadurch gekennzeichnet, daß der steuerbare Schalter (16) ein Ruhekontakt eines Relais ist, dessen Wicklung vom zweiten Schaltregler, insbesondere von der Differenz von Ausgangsspannung (U5) und Eingangsspannung (U4) des zweiten Schaltreglers gesteuert ist.

4. Schaltungsanordnung nach einem der Ansprüche 1 bis 3, dadurch gekennzeichnet, daß der steuerbare Schalter durch das Schaltglied (3) des ersten Schaltreglers (SR) gebildet ist.

5. Schaltungsanordnung nach einem der Ansprüche 1 bis 4, dadurch gekennzeichnet, daß der steuerbare Schalter (16) durch einen in Serie zum Eingang des ersten Schaltreglers (SR) liegenden Stromfühler derart steuerbar ist, daß er bei Strömen, die einen vorgegebenen Grenzwert übersteigen, geschlossen wird.

6. Schaltungsanordnung nach einem der Ansprüche 1 bis 5, dadurch gekennzeichnet, daß der Stromfühler in Serie zum Schaltglied (3) des ersten Schaltreglers (SR) liegt und daß das Schaltglied (3) durch den Stromfühler derart steuerbar ist, daß es bei Strömen, die einen vorgegebenen Grenzwert übersteigen, schließt.

7. Schaltungsanordnung nach Anspruch 3 und 6, dadurch gekennzeichnet, daß das Relais mit zwei Wicklungen versehen ist, von denen die eine an eine Hilfsspannung und die andere an den Stromfühler angeschlossen ist oder diesen Stromfühler selbst bildet.

8. Schaltungsanordnung nach einem der Ansprüche 1 bis 7, dadurch gekennzeichnet, daß an die Hilfsspannungsquelle ein zwischen dem Ausgang des Schaltreglers (SR) und wenigstens einem Verbraucher (V) angeordneter Spannungsumrichter (8) angeschlossen ist.

9. Schaltungsanordnung nach Anspruch 1 oder 2, dadurch gekennzeichnet, daß die Steuerschaltungen (7, 15) des ersten und des zweiten Schaltreglers (SR, H) an einen gemeinsamen Taktgeber (6) angeschlossen sind.

10. Schaltungsanordnung nach einem der Ansprüche 1 bis 3, dadurch gekennzeichnet, daß der weitere Schaltregler (H) derart bemessen ist, daß die Ausgangsspannung (U5) größer als die Eingangsspannung (U4) ist und daß die eine Hilfsspannung die Eingangsspannung (U4) und die andere Hilfsspannung die Differenz von Ausgangsspannung (U5) und Eingangsspannung (U4) des weiteren Schaltreglers (H) ist, so daß die Hilfsspannungsquelle (H) eine positive und eine negative Hilfsspannung abgibt.

## Claims

1. Circuit arrangement for supplying electrical appliances (V) with a direct voltage, at least one appliance (V) being connected via a first switched-mode regulator (SR) to a feed circuit (FK), which is fed with an impressed current ($i_o$), and the switched-mode regulator (SR) containing at least one switching element (3) which can be controlled by means of a control circuit (6, 7), supplied from an auxiliary voltage source (H), in dependence on the direct voltage (U2 and U3) which is to be kept at least approximately constant, characterized in that the auxiliary voltage source is formed by a second switched-mode regulator (H), the switching element of which is arranged in parallel with the input of the switched-mode regulator (H) and that a diode (12) is located between the switching element (11) and a capacitor (13) located in parallel with the output of the switched-mode regulator (H), which diode (12) is polarized in such a manner that the diode (12) is blocked when the switching element (11) conducts and that the two switched-mode regulators (SR, H) are arranged in series with one another at the input.

2. Circuit arrangement according to Claim 1, characterized in that, in parallel with the input of the first switched-mode regulator (SR), a switch (16) is arranged which can be controlled by the second switched-mode regulator (H) in such a manner that the switch (16) is only opened when the auxiliary voltage (U5) is present.

3. Circuit arrangement according to Claim 1 or 2, characterized in that the controllable switch (16) is a normally-closed contact of a relay the winding of which is controlled by the second switched-mode regulator, in particular by the difference between the output voltage (U5) and the input voltage (U4) of the second switched-mode regulator.

4. Circuit arrangement according to one of Claims 1 to 3, characterized in that the controllable switch is formed by the switching element (3) of the first switched-mode regulator (SR).

5. Circuit arrangement according to one of Claims 1 to 4, characterized in that the controllable switch (16) can be controlled by a current sensor, which is located in series with the input of the first switched-mode regulator (SR), in such a manner that it is closed with currents which exceed a predetermined limit value.

6. Circuit arrangement according to one of Claims 1 to 5, characterized in that the current sensor is located in series with the switching element (3) of the first switched-mode regulator (SR) and that the switching element (3) can be controlled by the current sensor in such a manner that it closes with currents which exceed a predetermined limit value.

7. Circuit arrangement according to Claims 3 and 6, characterized in that the relay is provided with two windings, one of which is connected to an auxiliary voltage and the other one of which is connected to the current sensor or itself forms this current sensor.

8. Circuit arrangement according to one of Claims 1 to 7, characterized in that a voltage converter (8), which is arranged between the output of the switched-mode regulator (SR) and at least one appliance (V), is connected to the auxiliary voltage source.

9. Circuit arrangement according to Claim 1 or 2, characterized in that the control circuits (7, 15) of the first and of the second switched-mode regulator (SR, H) are connected to a common clock generator (6).

10. Circuit arrangement according to one of Claims 1 to 3, characterized in that the further switched-mode regulator (H) is dimensioned in such a manner that the output voltage (U5) is higher than the input voltage (U4) and that one auxiliary voltage is the input voltage (U4) and the other auxiliary voltage is the difference between output voltage (U5) and input voltage (U4) of the further switched-mode regulator (H), so that the auxiliary voltage source (H) emits a positive and a negative auxiliary voltage.

## Revendications

1. Montage pour alimenter des appareils d'utilisation électriques (V) avec une tension continue, et dans lequel au moins un appareil d'utilisation (V) est raccordé par l'intermédiaire d'un premier commutateur de régulation (SR) à un circuit d'alimentation (FK) alimenté par un courant injecté ($i_o$), et le régulateur de commutation (SR) contient au moins un élément de commutation (3) pouvant être commandé au moyen d'un circuit de commande (6, 7) alimenté à partir d'une source de tension auxiliaire (H), en fonction de la tension continue (U2 ou U3) devant être maintenue au moins approximativement constante, caractérisé par le fait que la source de tension auxiliaire est formée par un second régulateur de commutation (H), dont l'élément de commutation est branché en parallèle avec l'entrée du régulateur de commutation (H), et qu'entre l'élément de commutation (11) et un condensateur (13) branché en parallèle avec la sortie du régulateur de commutation (H) se trouve disposée une diode (12) polarisée de telle sorte qu'elle est bloquée lorsque l'élément de commutation (11) est conducteur, et que les deux régulateurs de commutation (SR, H) sont raccordés en série au niveau de l'entrée.

2. Montage suivant la revendication 1, caractérisé par le fait qu'en parallèle avec l'entrée du premier régulateur de commutation (SR) est branché un interrupteur (16) pouvant être commandé par le second régulateur de commutation (H) de telle sorte que cet interrupteur (16) s'ouvre uniquement dans le cas où la tension auxiliaire (U5) est présente.

3. Montage suivant la revendication 1 ou 2, caractérisé par le fait que l'interrupteur commandable (16) est le contact de repos d'un relais, dont l'enroulement est commandé par le second régulateur de commutation, notamment par la différence entre la tension de sortie (U5) et la tension d'entrée (U4) du second régulateur de commutation.

4. Montage suivant l'une des revendications 1 à 3, caractérisé par le fait que l'interrupteur commandable est formé par l'élément de commutation (3) du premier régulateur de commutation (SR).

5. Montage suivant l'une des revendications 1 à 4, caractérisé par le fait que l'interrupteur commandable (16) peut être commandé par un détecteur de courant branché en série avec l'entrée du premier régulateur de commutation (SR), de telle sorte qu'il est fermé dans le cas de courants dépassant une valeur limite prédéterminée.

6. Montage suivant l'une des revendications 1 à 5, caractérisé par le fait que le détecteur de courant est branché en série avec l'élément de commutation (3) du premier régulateur de commutation (SR) et que l'élément de commutation (3) peut être commandé par le détecteur de courant de telle sorte qu'il est fermé dans le cas de courants dépassant une valeur limite prédéterminée.

7. Montage suivant les revendications 3 et 6, caractérisé par le fait que le relais comporte deux enroulements, dont l'un est placé à une tension auxiliaire et dont l'autre est raccordé au détecteur de courant ou bien forme ce détecteur de courant lui-même.

8. Montage suivant l'une des revendications 1 à 7, caractérisé par le fait qu'un convertisseur statique de tension (8) disposé entre la sortie du régulateur de commutation (SR) et au moins un appareil d'utilisation (V) est raccordé à la source de tension auxiliaire.

9. Montage suivant la revendication 1 ou 2, caractérisé par le fait que les circuits de commande (7, 15) des premier et second régulateurs de commutation (SR, H) sont raccordés à un générateur de cadence commun (6).

10. Montage suivant l'une des revendications 1 à 3, caractérisé par le fait que l'autre régulateur de commutation (H) est dimensionné de telle sorte que la tension de sortie (U5) est supérieure à la tension d'entrée (U4) et qu'une tension auxiliaire est la tension d'entrée (U4) et l'autre tension auxiliaire est la différence entre la tension de sortie (U5) et la tension d'entrée (U4) de l'autre régulateur de commutation (H), de sorte que la source de tension auxiliaire (H) délivre une tension auxiliaire positive et une tension auxiliaire négative.

FIG 1

FIG 2

# FIG 3

# FIG 4

# FIG 5

# FIG 6